# EUROPEAN PATENT SPECIFICATION

(11) **EP 1 153 547 B1**
(45) Date of publication and mention of the grant of the patent: **24.11.2004**
(21) Application number: 01105171.1
(22) Date of filing: 02.03.2001
(51) Int. Cl.: A23L 1/22, A61K 7/46

(54) **Organoleptic compositions**
Organoleptische Zusammensetzung
Composition organoleptique

(30) Priority: 08.03.2000 EP 00104904
(43) Date of publication of application: 14.11.2001
(73) Proprietor: Givaudan SA, 1214 Vernier (CH)
(72) Inventor: Gassenmeier, Klaus, 8600 Dübendorf (CH); Grab, Willi, Singapore 278733 (SG); Galopin, Christophe, West Chester, Ohio 45069 (US); Bigler, Beatrice, 8050 Zürich (CH)
(74) Representative: McStea, John Anthony

(56) References cited:
- CH-A- 557 423
- FR-A- 2 525 870
- US-A- 3 954 843
- US-A- 4 426 403

## Description

The present invention relates to flavor or fragrance compositions comprising 3-mercapto carboxylic esters and/or precursors thereof and to a method of flavoring a food, a beverage or a consumer healthcare or household product using these compounds.

The Swiss patent 557 423 describes 3-mercapto carboxylic esters of the general formula I 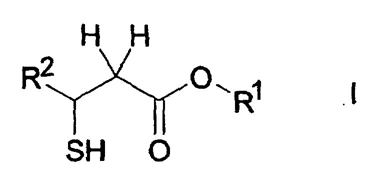 wherein R1 represents an alkyl or alkenyl or alkadienyl group with 1 to 6 carbon atoms, and R2 represents an alkyl or alkenyl group containing 3 to 9 carbon atoms are known as flavor or fragrance compounds.

These compounds possess either green organoleptic properties, e.g. leaf green (3-mercapto-4-methylhexanoic acid ethyl ester), green fruity (3-mercapto-4-methylhexanoic acid hex-3-enyl ester), green and pungent (3-mercapto-4-methylhexanoic acid 2-hexenyl ester) or fatty organoleptic properties (e.g. 3-mercaptooctanoic acid ethyl ester, 3-mercaptononanoic acid methyl ester, 3-mercaptodecanoic acid ethyl ester or 3-mercapto-4-ethylhexanoic acid ethyl ester). But an exception represents 3-mercapto-4-methylhexanoic acid hexa-2,4-dienyl ester with a sulfurous, onion and garlic-like note. The latter mentioned compound demonstrates that a small change in the structure of the compound can cause already a dramatically change of the odor properties, e.g. a hexa-2,4-dienyl group instead of a hex-3-enyl group changes the organoleptic character from green-fruity to onion, garlic-like.

The flavor and fragrance industry is still further interested in new ingredients with a clear fruity character. Thus, the above mentioned compounds would be of interest if they have not the disadvantage that the fruity note is always combined with green and/or fatty notes.

Surprisingly, it has now been found that compounds of formula I and precursors thereof, wherein R1 represents an alkyl, alkenyl or alkadienyl group containing 1 to 8 carbon atoms and R2 represents a methyl or an ethyl group, whereby the alkyl, alkenyl or alkadienyl group can be branched or unbranched, overcome the afore mentioned disadvantage and, hence, can be used as flavor or fragrance compounds with a clear fresh character. Thus, the present invention is directed to this subject matter. The compounds according to the invention can advantageously be used as ingredients for flavor or fragrance compositions as will be explained below. If the compounds contain double bonds, they can exist in any desired stereoconfiguration.

Preferred examples of R1 are methyl, ethyl, n- or iso-propyl, n- or iso- or tert-butyl, n-hexyl, (Z)-2-hexenyl, (E)-3-hexenyl, (E)-2-hexenyl, (Z)-3-hexenyl and n-octyl.

The compounds shall include the racemates as well as the pure enantiomers, which are defined by the asymmetric centre in beta position to the acid functionality.

Especially preferred compounds to be used as flavor or fragrance ingredients are 3-mercaptobutanoic acid methyl ester, 3-mercaptobutanoic acid ethyl ester, 3-mercaptobutanoic acid n-hexyl ester, (R)-3-mercaptobutanoic acid methyl ester, 3-mercaptobutanoic acid (Z)-3-hexenyl ester and 3-mercaptopentanoic acid ethyl ester, whereby 3-mercaptobutanoic acid methyl ester and 3-mercaptobutanoic acid ethyl ester are the most preferred ones.

Structurally, the compounds according to the invention differ from the compounds described in the afore mentioned Swiss patent in their chain length of the acid.

3-Mercaptoalkanoic acid esters according to the present invention are known in the literature, e.g. by the German Offenlegungsschrift 2 363 573. They are e.g. used as intermediates in the synthesis of pharmaceuticals (e.g. leukotrien antagonists and inhibitors of leukotrien biosynthesis as described by the European patent publication EP 0399818). Further, US patent 3,954,843 describes the general synthetic pathways for the production of the racemates and in Tetrahedron Letters, Vol 32, No.46, pp 6723-6726, 1991, the production of the pure enantiomere is described.

It has been found that the compounds of the present invention exhibit fruity properties, mainly in the range of passion fruit, cassis or tropical fruit which organoleptic properties have never been described before although the compounds themselves are already known as said already above. They differ strongly in their organoleptic properties from the compounds mentioned in Swiss patent 557 423 and in contrast to these the unwanted, disturbing green or fatty odor aspects are absent.

The preferred compounds according to the invention are the short chain compounds with a total maximum number of C-atoms of 7. They exhibit strong cassis-like and/or red fruit notes, which remind on passion fruit, black current and blackberry.

Compounds according to the invention with a total carbon atom number of equal to or greater than 8 are very substantive and, therefore, are specifically useful as ingredients in fragrances. They exhibit fresh-cassis and ripe-estery notes, and remind on grapefruit and/or citrus and/or Riesling wine.

It was found that the organoleptic properties of the R and S isomers are very similar. Therefore, from the economic point of view the easier and cheaper accessible racemates are preferred over the pure enantiomers.

Based on their clear fruity organoleptic properties the compounds are suitable for the creation of flavor and fragrance compositions. They can be combined in the usual manner with practically all available flavor or fragrance raw materials, i.e. synthetic and/or nature identical and/or natural substances and/or natural extracts and/or additional carrier materials and/or further additives used in the flavor or fragrance field.

Specifically, the very distinct berry and estery floral notes of the compounds according to the invention enable the production of specific and characteristic flavor profiles, which are new. These can be used for the aromatization of foodstuff, beverages, pharmaceuticals, oral hygiene products (e.g. toothpaste) or other healthcare products.

Further, specifically the compounds of the invention add a berry, fruity and some tropical aspects to fruit flavor compositions like peach, strawberry, passion fruit, citrus and raspberry. Thereby the body of the flavor is increased and its stability (longlastiness) improved. However, the use is not restricted to fruit flavors, but the compounds according to the invention can be combined also with herbal, mint and savoury flavors, whereby they increase especially the fullness, freshness and/or the herbal character. So, for example, in meat flavors they increase the natural meat aroma.

Due to their fruity odor characteristics the compounds of the invention can also be used in fragrance compositions like fine fragrances or perfumed products of all kinds, especially of cosmetic articles, consumer healthcare or household products, as e.g. washing agents, detergents, soaps or toothpaste. Here, specifically the compounds according to the invention add an herbal-fruity and, surprisingly, also marine aspect to floral, musk and woody accords. At the same time the freshness is increased.

The preferred dosage range of the compounds according to the invention in a food, a beverage, a consumer healthcare or a household product is from 0.001 to 500 mg/kg, preferably 0.01 to 50 mg/kg. In fragrance compositions concentrations of the compound(s) according to the invention of from 0.001% to 30%, preferably from 0.01% to 10%, are preferably used.

Instead of directly using a compound of the invention as flavor or fragrance ingredient, it may be advantageous to use a precursor thereof, i.e. a chemical derivative of a compound according to the invention which can be easily transformed to the compound according to the invention. The precursors themself can already be of sensorial interest. For example and preferably, as precursors the esters of 3-acylthio acids, which can be obtained by treatment of the compounds according to the invention with acyl chloride, may be added to an aroma or food or fragrance composition. From the esters of 3-acylthioacids the compounds according to the invention can be released by enzymatic hydrolysis and/or chemical treatment. This reaction can take place either already in the flavor or fragrance composition or in the products containing these compositions.

The present invention is described further in the following examples which are presented solely for the non-limiting purpose of further illustrating the invention.

### Example 1

### Synthesis of 3-mercaptopentanoic acid methyl ester

At 0°C, 5.71g of 2-pentenoic acid methyl ester where introduced in a 500mL round-bottom flask containing 200mL of dry methanol. A solution of 4.44g of NaSH•H₂O and 2.57mL acetic acid in 100mL methanol was then added. The resulting orange mixture was stirred at room temperature for 2 days. Solution was then concentrated, taken in ether, washed with water, dried over MgSO₄, filtered and concentrated again and gave 7g of a pale yellow oil containing about 38% of the desired compound which was purified by column chromatography.

### Example 2

### Synthesis of (R)-3-mercaptobutanoic acid methyl ester.

The synthesis was done according to the description of Breitschuh, R.; Seebach, D. *Synthesis,* **1992,** 83-89 as follows:

At 0°C, 82.31g of NaSH•H₂O was added to a 1.5L round-bottom flask containing 600mL of distilled water. To this solution, 83.08g of (S)-b-butyrolactone were added over a period of 20 minutes. The mixture was stirred for 1h at 0°C and stayed overnight at room temperature. The solution was then brought to pH 2 and was extracted with ether. The organic layer was washed with brine, dried over MgSO₄, filtered and concentrated to give 110g of slightly yellow oil. In a 250mL flask, 30g of the oil previously obtained were dissolved in 80mL of methanol. A catalytic amount of sulfuric acid was added to the mixture, which was heated at reflux for 19h. The solution was then concentrated and partitioned between ether and cold brine. The organic layer was washed with sodium bicarbonate and brine, dried over MgSO₄, filtered and concentrated and gave 35.2g of oil, which was purified by chromatography on silica gel.

### Example 3

### Synthesis of 3-acetylthiobutanoic acid hexyl ester

At room temperature, in a 250-mL round-bottom flask with a gas outlet, 21 g of 3-mercaptobutanoic acid hexyl ester were dissolved in 50mL of neat acetyl chloride. The mixture was stirred at room temperature for 6h. It was then cooled down to 0°C and the reaction was quenched by careful addition of 100 mL of dry methanol in small portions. The mixture was then washed with bicarbonate, dried over MgSO₄, filtered and concentrated and gave the acetylated compound in 98% yield.

### Example 4

To a tropical fruit soft drink of the following composition (a) containing the following fruit flavor (b) 0.1 mg/L 3-mercaptobutanoic acid methyl ester was added. Thereby, compared with the aroma note of the starting soft drink additionally a passion fruit typical top note occurred and, at the same time, the freshness was increased significantly.
a): Composition of typical tropical fruit soft drink:

| | [g] |
|---|---|
| water | 9500 |
| sugar syrup 65 Brix | 170 |
| citric acid 50% | 5 |
| sodium citrate | 0.4 |
| sodium benzoate | 0.15 |
| tropical fruit flavor (b) | 0.3 |

(b): Composition of tropical fruit flavor

| | [g] |
|---|---|
| benzaldehyde | 4.0 |
| linalool | 4.0 |
| (Z)-3-hexenyl butanoate | 4.0 |
| 4-hydroxy-2,5-dimethyl-2(5H)-dihydrofuran-3-one | 8.0 |
| ethyl butanoate | 30.0 |
| hexyl butanoate | 24.0 |
| ethyl hexanoate | 14.0 |
| 1-phenylethyl acetate | 9.8 |
| 3,7-dimethyl-2,6-octadienthiol | 0.2 |
| (Z)-3-hexenol | 2.0 |
| propylenglycol | 900.0 |

### Example 5

For comparison to an orange soft drink (blank) of the composition as described below having an orange, aldehydic and soapy aroma on one hand 3-mercaptobutanoic acid methyl ester and on the other hand 3-mercaptohexanoic acid methyl ester, which is an example out of the group of compounds described by at the Swiss patent mentioned at the beginning and having a structure coming closest to the compound of the present invention, were added both at a level of 0.1 mg/L and both compared with the blank orange soft drink. The drink containing 3-mercaptobutanoic acid methyl ester exhibited an orange, mandarine, fresh squeezed juice note with strong fruity aspects, which is a significant improvement over the blank soft drink. In contrast thereto, the drink containing 3-mercaptohexanoic acid methyl ester exhibited a strong fatty sulfury-woody aroma with a grapefruit aspect.

### Composition of orange soft drink:

| | [g] |
|---|---|
| water | 9500 |
| sugar syrup 65 Brix | 170 |
| citric acid 50% | 5 |
| sodium citrate | 0.4 |
| sodium benzoate | 0.15 |
| orange oil 40 fold | 0.005 |

### Example 6

To a woodberry flavored yoghurt (blank) consisting of components (a) and (b) as described below 3-mercaptobutanoic acid methyl ester and 3-mercaptobutanoic acid ethyl ester were added and compared with a yoghurt having an addition of 3-mercaptohexanoic acid methyl ester.

To the blank woodberry flavored yoghurt 0.2 mg/kg 3-mercaptobutanoic acid methyl ester was added. Compared with the blank woodberry favored yoghurt a strong red fruit note, reminiscent on blackberry was present. An addition of 3-mercaptobutanoic acid ethyl ester at a level of 2 mg/kg to the blank woodberry flavored yoghurt increased the freshness and the overall flavor profile changed to blueberry. In contrast thereto an addition of 3-mercaptohexanoic acid methyl ester, i.e. a long chain 3-mercaptocarboxolic ester as described by the prior mentioned Swiss patent, at a level of 0.2 mg/kg resulted in a soapy taste profile. At a level of 2 mg 3-mercaptohexanoic acid methyl ester per 1kg yoghurt yielded a fatty-meaty, sulfury aroma profile.
(a) Yoghurt (3.5 % fat, 10.0% sucrose) with 1g woodberry flavor per 1 kg yoghurt (b).
(b)

| Woodberry flavor | [ g] |
|---|---|
| benzyl acetate | 0.5 |
| ethyl acetate | 4.0 |
| ethyl 3-metehylbutanoate | 1.5 |
| (Z)-3-hexenol | 0.1 |
| alpha-ionone | 0.2 |
| linalool | 0.5 |
| 3-methylbutyl 3-methylbutanoate | 0.3 |
| 4-(4-hydroxyphenyl)-2-butanone | 2.0 |
| cylopentadecanolide | 0.4 |
| vanillin | 0.5 |
| propylenglycol | 90.0 |

### Example 7

Comparison of two fragrance accords, either with 3-mercaptobutanoic acid methyl ester or with 3-mercaptohexanoic acid methyl ester.

To a clementine accord as described below 0.004 % (w/w) 3-mercaptobutanoic acid methyl ester was added. At that very low level the accord turned from orange-mandarine to green clementine. The sample with addition of 3-mercaptobutanoic acid methyl ester was more sparkling, natural clementine and strongly increased the diffusivity. When the 3-mercaptohexanoic acid methyl ester was used instead, the diffusivity was much less, and a disturbing sulfury, fatty-meaty side note appeared.

### Formula of clementine accord

| | |
|---|---|
| rose oxide | 1 |
| buchu leaf oil | 2 |
| geranyl acetate | 3 |
| geranyl butyrate | 3 |
| ethyl caprylate | 4 |
| (E)-2-hexenale | 4 |
| geranyl isobutyrate | 4 |
| cinnamic aldeyhde | 5 |
| oxane 5% in dipropylene glycol | 5 |
| hexanale | 6 |
| (Z)-3-hexenol | 6 |
| linalool oxyd | 6 |
| isoeugenol acetate | 7 |
| corps pampelmousse 10% | |
| in triethyl citrate | 10 |
| benzaldehyde | 15 |
| allyl hepatanoate | 15 |
| cinnamyl acetate | 20 |
| beta ionone | 24 |
| ethyl acetoacetate | 60 |
| gamma undecalactone | 80 |
| ethyl acetate | 120 |
| labienoxime | 200 |
| lemon oil italy | 600 |
| furonol 1% in triethyl citrate | 1060 |
| orange oil 7-fold | 2000 |
| orange oil brasil | 2400 |
| dipropylene glycol | 3340 |
| | 10000 |

## Claims

1. A flavor or fragrance composition comprising at least one compound of formula I 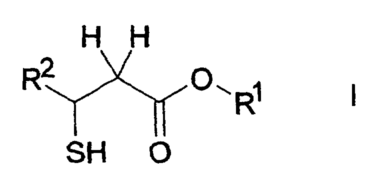 or a precursor thereof, wherein R1 represents a branched or unbranched alkyl, alkenyl or alkadienyl group containing 1 to 8 carbon atoms and R2 represents a methyl or an ethyl group.

2. The composition according to claim 1, wherein R1 is selected from the group consisting of methyl, ethyl, n- or iso-propyl, n- or iso- or tert-butyl, n-hexyl, (Z)-2-hexenyl, (E)-3-hexenyl, (E)-2-hexenyl, (Z)-3-hexenyl and n-octyl.

3. The composition according to claim 1, wherein at least one compound is selected from the group consisting of 3-mercaptobutanoic acid methyl ester, 3-mercaptobutanoic acid ethyl ester, 3-mercaptobutanoic acid n-hexyl ester, (R)-3-mercaptobutanoic acid methyl ester, 3-mercaptobutanoic acid (Z)-3-hexenyl ester and 3-mercaptopentanoic acid ethyl ester or a precursor thereof.

4. The composition according to claim 3, wherein at least one compound is 3-mercaptobutanoic acid methyl ester or 3-mercaptobutanoic acid ethyl ester.

5. The fragrance composition according to claim 1, wherein the total amount of carbon atoms of at least one compound of formula I is equal or greater 8.

6. The composition according to any one of the claims 1 to 4, wherein the precursor is performed by reaction of acyl chloride with the compound of formula I.

7. The fragrance composition of any one of the claims 1 to 6, wherein the concentration of the compound of formula I or of the precursor thereof is from 0.001% to 30%, preferably from 0.001% to 10%.

8. A method of flavoring a food, a beverage or a consumer healthcare or household product, wherein at least one compound of formula I 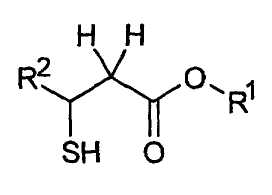 or a precursor thereof, wherein R1 represents a branched or unbranched alkyl, alkenyl or alkadienyl group containing 1 to 8 carbon atoms and R2 represents a methyl or an ethyl group, is added.

9. The method according to claim 8, wherein R1 is selected from the group consisting of methyl, ethyl, n- or iso-propyl, butyl n-, iso- or tert-, n-hexyl, (Z)-2-hexenyl, (E)-3-hexenyl, (E)-2-hexenyl, (Z)-3-hexenyl and n-octyl.

10. The method according to claim 9, wherein at least one compound is selected from the group consisting of 3-mercaptobutanoic acid methyl ester, 3-mercaptobutanoic acid ethyl ester, 3-mercaptobutanoic acid n-hexyl ester, (R)-3-mercaptobutanoic acid methyl ester, 3-mercaptobutanoic acid (Z)-3-hexenyl ester and 3-mercaptopentanoic acid ethyl ester or a precursor thereof.

11. The method according to claim 9, wherein at least one compound is 3-mercaptobutanoic acid methyl ester or 3-mercaptobutanoic acid ethyl ester.

12. The method according to anyone of the claims 8 to 11, wherein the precursor is performed by reaction of acyl chloride with the compound of formula I.

13. The method of any one of the claims 8 to 12, wherein the compound(s) of formula I or the precursor(s) thereof is/are present in an amount of 0.001 mg/kg to 500 mg/kg food, beverage or consumer healthcare or household product, preferably in an amount of 0.01 mg/kg to 50 mg/kg food, beverage or consumer healthcare or household product.

## Patentansprüche

1. Aromastoff- oder Duftstoffzusammensetzung, die mindestens eine Verbindung umfasst der Formel I 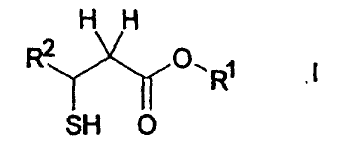 oder eine Vorläuferverbindung davon, worin R1 steht für eine verzweigte oder unverzweigte Alkyl-, Alkenyl- oder Alkadienylgruppe, die 1 bis 8 Kohlenstoffatome enthält, und R2 steht für eine Methyl- oder eine Ethylgruppe.

2. Die Zusammensetzung nach Anspruch 1, worin R1 ausgewählt ist aus der Gruppe, bestehend aus Methyl, Ethyl, n- oder iso-Propyl, n- oder iso- oder tert.-Butyl, n-Hexyl, (Z)-2-Hexenyl, (E)-3-Hexenyl, (E)-2-Hexenyl, (Z)-3-Hexenyl und n-Octyl.

3. Die Zusammensetzung nach Anspruch 1, worin mindestens eine Verbindung ausgewählt ist aus der Gruppe, bestehend aus 3-Mercaptobutansäuremethylester, 3-Mercaptobutansäureethylester, 3-Mercaptobutansäure-n-hexylester, (R)-3-Mercaptobutansäuremethylester, 3-Mercaptobutansäure-(Z)-3-hexenylester und 3-Mercaptopentansäureethylester oder einer Vorläuferverbindung davon.

4. Die Zusammensetzung nach Anspruch 3, worin mindestens eine Verbindung für 3-Mercaptobutansäuremethylester oder 3-Mercaptobutansäureethylester steht.

5. Die Duftstoffzusammensetzung gemäß Anspruch 1, worin die Gesamtanzahl an Kohlenstoffatomen von mindestens einer Verbindung der Formel I gleich oder größer als 8 ist.

6. Die Zusammensetzung nach einem der Ansprüche 1 bis 4, worin die Vorläuferverbindung dargestellt wird durch Umsetzung eines Acylchlorids mit der Verbindung der Formel I.

7. Die Duftstoffzusammensetzung nach einem der Ansprüche 1 bis 6, worin die Konzentration der Verbindung der Formel I oder der Vorläuferverbindung davon von 0.001 % bis 30 %, vorzugsweise von 0.001 % bis 10 %, beträgt.

8. Verfahren zur Aromatisierung eines Nahrungsmittels, eines Getränks oder eines Verbrauchergesundheitspflege- oder Haushaltsprodukts, wobei mindestens eine Verbindung der Formel I 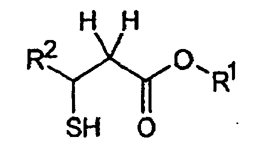 oder eine Vorläuferverbindung davon, worin R1 steht für eine verzweigte oder unverzweigte Alkyl-, Alkenyl- oder Alkadienylgruppe, die 1 bis 8 Kohlenstoffatome enthält, und R² steht für eine Methyl- oder eine Ethylgruppe, zugegeben wird.

9. Das Verfahren nach Anspruch 8, worin R1 ausgewählt ist aus der Gruppe, bestehend aus Methyl, Ethyl, n- oder iso-Propyl, n- oder iso- oder tert.-Butyl, n-Hexyl, (Z)-2-Hexenyl, (E)-3-Hexenyl, (E)-2-Hexenyl, (Z)-3-Hexenyl und n-Octyl.

10. Das Verfahren nach Anspruch 9, worin mindestens eine Verbindung ausgewählt ist aus der Gruppe, bestehend aus 3-Mercaptobutansäuremethylester, 3-Mercaptobutansäureethylester, 3-Mercaptobutansäure-n-hexylester, (R)-3-Mercaptobutansäuremethylester, 3-Mercaptobutansäure-(Z)-3-hexenylester und 3-Mercaptopentansäureethylester oder eine Vorläuferverbindung davon.

11. Das Verfahren nach Anspruch 9, worin mindestens eine Verbindung für 3-Mercaptobutansäuremethylester oder 3-Mercaptobutansäureethylester steht.

12. Das Verfahren nach einem der Ansprüche 8 bis 11, worin die Vorläuferverbindung dargestellt wird durch Umsetzung eines Acylchlorids mit der Verbindung der Formel I.

13. Das Verfahren nach einem der Ansprüche 8 bis 12, worin die Verbindung(en) der Formel I oder die Vorläuferverbindung(en) davon in einer Menge von 0.001 mg/kg bis 500 mg/kg Nahrungsmittel, Getränk oder Verbrauchergesundheitspflege- oder Haushaltsprodukt, vorzugsweise in einer Menge 0.01 mg/kg bis 50 mg/kg Nahrungsmittel, Getränk oder Verbrauchergesundheitspflege- oder Haushaltsprodukt vorliegt/vorliegen.

## Revendications

1. Composition d'arôme ou de parfum comprenant au moins un composé de formule 1 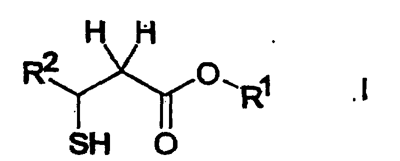 ou l'un de ses précurseurs, dans laquelle R¹ représente un groupe alkyle ramifié ou non ramifié, un groupe alcényle ou alcadiényle contenant 1 à 8 atomes de carbone, et R² représente un groupe méthyle ou éthyle.

2. Composition selon la revendication 1, dans laquelle R¹ est choisi dans le groupe constitué par les radicaux méthyle, éthyle, n- ou iso-propyle, n- ou iso- ou tert-butyle, n-hexyle, (Z)-2-hexényle, (E)-3-hexényle, (E)-2-hexényle, (Z)-3-hexényle et n-octyle.

3. Composition selon la revendication 1, dans laquelle au moins un composé est choisi dans le groupe constitué par l'ester méthylique d'acide 3-mercaptobutanoïque, l'ester éthylique d'acide 3-mercaptobutanoïque, l'ester n-hexylique d'acide 3-mercaptobutanoïque, l'ester méthylique d'acide (R)-3-mercaptobutanoïque, l'ester (Z)-3-hexénylique d'acide 3-mercaptobutanoïque et l'ester éthylique d'acide 3-mercaptopentanoïque ou un de leurs précurseurs.

4. Composition selon la revendication 3, dans laquelle au moins un composé est l'ester méthylique d'acide 3-mercaptobutanoïque ou l'ester éthylique d'acide 3-mercaptobutanoïque.

5. Composition de parfum selon la revendication 1, dans laquelle la quantité totale d'atomes de carbone d'au moins un composé de formule I est supérieure ou égale à 8.

6. Composition selon l'une quelconque des revendications 1 à 4, dans laquelle le précurseur s'obtient par réaction de chlorure d'acyle avec le composé de formule I.

7. Composition de parfum selon l'une quelconque des revendications 1 à 6, dans laquelle la concentration du composé de formule 1 ou de son précurseur est de 0,001 % à 30 %, de préférence de 0,001 % à 10 %.

8. Procédé pour aromatiser un aliment, une boisson ou bien un produit de soins médicaux ou un produit d'entretien de consommation, dans lequel au moins un composé de formule 1 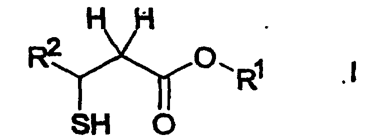 ou un de ses précurseurs, dans laquelle R¹ représente un groupe alkyle ramifié ou non ramifié, un groupe alcényle ou alcadiényle contenant 1 à 8 atomes de carbone, et R² représente un groupe méthyle ou éthyle, est ajouté.

9. Procédé selon la revendication 8, dans lequel R¹ est choisi dans le groupe constitué par les radicaux méthyle, éthyle, n- ou iso-propyle, n- ou iso- ou tert-butyle, n-hexyle, (Z)-2-hexényle, (E)-3-hexényle, (E)-2-hexényle, (Z)-3-hexényle et n-octyle.

10. Procédé selon la revendication 9, dans lequel au moins un composé est choisi dans le groupe constitué par l'ester méthylique d'acide 3-mercaptobutanoïque, l'ester éthylique d'acide 3-mercaptobutanoïque, l'ester n-hexylique d'acide 3-mercaptobutanoïque, l'ester méthylique d'acide (R)-3-mercaptobutanoïque, l'ester (Z)-3-hexénylique d'acide 3-mercaptobutanoïque et l'ester éthylique d'acide 3-mercaptopentanoïque ou un de leurs précurseurs.

11. Procédé selon la revendication 9, dans lequel au moins un composé est l'ester méthylique d'acide 3-mercaptobutanoïque ou l'ester éthylique d'acide 3-mercaptobutanoïque.

12. Procédé selon l'une quelconque des revendications 8 à 11, dans lequel le précurseur s'obtient par réaction de chlorure d'acyle avec le composé de formule I.

13. Procédé selon l'une quelconque des revendications 8 à 12, dans lequel le ou les composés de formule I ou le ou les précurseur(s) de ceux-ci est/sont présents en une quantité de 0,001 mg/kg à 500 mg/kg d'aliment, de boisson ou de produit de soins médicaux ou de produit d'entretien de consommation, de préférence en une quantité de 0,01 mg/kg à 50 mg/kg d'aliment, de boisson ou de produit de soins médicaux ou de produit d'entretien de consommation.
